# EUROPÄISCHE PATENTSCHRIFT

(11) **EP 0 442 101 B1**
(45) Veröffentlichungstag und Bekanntmachung des Hinweises auf die Patenterteilung: **12.04.1995**
(21) Anmeldenummer: 90124528.2
(22) Anmeldetag: 18.12.1990
(51) Int. Cl.: C08G 63/668, C11D 3/37

(54) **Polyester, die nichtionische Tenside einkondensiert enthalten, ihre Herstellung und ihre Verwendung in Waschmitteln**
Polyesters containing nonionic surfactants in a condensed form, their preparation and their use in detergents
Polyesters contenant des surfactants non ioniques sous forme condensée, leur préparation et leur utilisation dans les détergents

(30) Priorität: 19.01.1990 DE 4001415
(43) Veröffentlichungstag der Anmeldung: 21.08.1991
(73) Patentinhaber: BASF Aktiengesellschaft, 67063 Ludwigshafen (DE)
(72) Erfinder: Kud, Alexander, Dr., W-6509 Eppelsheim (DE); Boeckh, Dieter, Dr., W-6703 Limburgerhof (DE); Trieselt, Wolfgang, Dr., W-6700 Ludwigshafen (DE); Jaeger, Hans-Ulrich, Dr., W-6730 Neustadt (DE); Hartmann, Heinrich, Dr., W-6703 Limburgerhof (DE)

(56) Entgegenhaltungen:
- EP-A- 0 100 093
- FR-A- 2 192 167
- GB-A- 999 062
- US-A- 3 083 187
- CHEMICAL ABSTRACTS, Band 85, Nr. 6, 9. August 1976, Seite 51, Zusammenfassung Nr. 34091a, Columbus, Ohio, US; & JP-A-76 37 993 (TEIJIN, LTD) 30-03-1976

## Beschreibung

Aus der US-PS 3 557 039 sind stabile wäßrige Dispersionen von Polymerisaten bekannt, die durch Kondensation von Terephthalsäure oder Dimethylterephthalat mit Ethylenglykol und Polyethylenglykol eines durchschnittlichen Molekulargewichts von 1000 bis 4000 herstellbar sind. Das molare Verhältnis von Ethylenterephthalat- zu Polyethylenglykolterephthalat-Einheiten beträgt 2:1 bis 6:1. Die Dispersionen werden zur Behandlung der Oberflächen von Polyesterartikeln verwendet.

Aus der GB-PS 1 154 730 ist bekannt, daß beim Waschen von Textilgut die Wiederablagerung von Schmutz auf dem Textilgut dadurch verringert werden kann, daß man zur Waschflotte, die ein Detergens enthält, Polykondensate zusetzt, die entweder sich wiederholende Ester- oder Amideinheiten enthalten. Bei diesen Zusätzen handelt es sich beispielsweise um Kondensationsprodukte, die aus der US-PS 3557 039 bekannt sind und durch Kondensation von Dimethylterephthalat, Ethylenglykol und Polyethylenglykol eines Molekulargewichts von 1500 erhältlich sind.

Aus den EP-Anmeldungen 185 427, 241 984, 241 985 und 272 033 sind Polyesterkondensate von mehrwertigen aromatischen Carbonsäuren mit zweiwertigen Alkoholen und einseitig C₁-C₄-verschlossenen Polyethern bekannt, die die Schmutzablösung von Polyestergeweben fördern. Diese Polyester besitzen hydrophile Endgruppen, die in den genannten Anmeldungen als Voraussetzung für die schmutzablösenden Eigenschaften der Polyester genannt werden.

Die meisten der oben beschriebenen Polyester sind in Wasser bzw. in vielen flüssigen Waschmittelformulierungen lediglich dispergierbar, jedoch nicht klar löslich. Setzt man solche Polyester in Waschmittelformulierungen ein, so beobachtet man häufig eine stärkere Vergrauung des Waschguts in Gegenwart von Mineralöl/Pigment-Schmutzgewebe. Zudem kommt es häufig zu Unverträglichkeiten oder Problemen bei der Formulierung mit anderen Inhaltsstoffen der Waschmittel, z.B. Entmischungen bei flüssigen Waschmittelformulierungen, die einen optischen Aufheller enthalten, Wirksamkeitsverlust durch Hydrolyse unter Freisetzung von nicht waschaktiven Hydrolyseprodukten oder Phasentrennungen beim Formulieren konzentrierter Flüssigwaschmittel mit geringem Wassergehalt.

Aus der US-A-3 083 187 sind Polyester bekannt, die durch Umsetzung eines zweiwertigen Alkohols mit einer Dicarbonsäure in Gegenwart von Poly-1,2-Alkylenglykolen und ihrer Alkylether mit Molekulargewichten von 220 - 30000 hergestellt werden. Die Polyester werden als Dispergiermittel, als Waschmittel sowie als Zusatz zu Schmierölen und Kraftstoffen zur Erhöhung der Viskosität und des Viskositätsindex verwendet.

Aus der EP-A-0 100 093 sind Polyester bekannt, die durch Kondensation von Dicarbonsäuren mit 2,2-Dimethyl-1,3-Propandiol und Monohydroxypolyethern mit 8 - 20 Ethylenoxideinheiten hergestellt werden. Diese Polyester werden als Antistatika verwendet.

Der vorliegenden Erfindung liegt die Aufgabe zugrunde, Polyester zur Verfügung zu stellen, die gegenüber den bekannten Polyestern eine verbesserte Wirksamkeit und bessere Verträglichkeit mit flüssigen und pulverförmigen Waschmittelformulierungen aufweisen.

Die Aufgabe wird erfindungsgemäß gelöst mit Polyestern, die erhältlich sind durch Kondensation von
(a) Carbonsäuren mit mindestens 2 Carboxylgruppen, deren Estern, Anhydriden oder Mischungen,
(b) Glycerin, Pentaerythrit, Oligoglycerin bis zu Molekulargewichten von 363 und/oder Additionsprodukten von 1 bis 5 mol mindestens eines Alkylenoxids mit 2 bis 3 C-Atomen an 1 mol der genannten Alkohole und
(c) wasserlöslichen Anlagerungsprodukten von 5 bis 80 mol mindestens eines Alkylenoxids an 1 mol C₈- bis C₂₄-Alkohole, C₆₋ bis C₁₈-Alkylphenole oder C₈- bis C₂₄-Alkylamine
im Molverhältnis (a):(b):(c) von 100:(25 bis 2500):(5 bis 110) bei Temperaturen von mindestens 120°O bis zu Molekulargewichten (Gewichtsmittel) von 2000 bis 50000.

Gegenstand der Erfindung ist außerdem die Verwendung von Polyestern, die erhältlich sind durch Kondensation von
(a) Carbonsäuren mit mindestens 2 Carboxylgruppen, deren Estern, Anhydriden oder Mischungen,
(b) mindestens zweiwertigen Alkoholen und/oder Additionsprodukten von 1 bis 5 mol mindestens eines Alkylenoxids mit 2 oder 3 C-Atomen an 1 mol eines mindestens zweiwertigen Alkohols oder Mischungen und
(c) wasserlöslichen Anlagerungsprodukten von 5 bis 80 mol mindestens eines Alkylenoxids an 1 mol C₈- bis C₂₄-Alkohole, C₆- bis C₁₈-Alkylphenole oder C₈- bis C₂₄-Alkylamine
im Molverhältnis (a):(b):(c) von 100:(25 bis 2500):(5 bis 110) bei Temperaturen von mindestens 120°C bis zu Molekulargewichten (Gewichtsmittel) von 2000 bis 50000 als vergrauungsinhibierender und schmutzablösungsfördernder Zusatz zu pulverförmigen und flüssigen Waschmitteln in Mengen von 0,05 bis 15 Gew.-%, bezogen auf die Waschmittelformulierungen.

Als Komponente (a) zur Herstellung der Polyester eignen sich beispielsweise Terephthalsäure, o- bzw. m-Phthalsäure, Sulfoisophthalsäure, Trimellitsäure, Pyromellitsäure sowie die Mono- und Dialkylester mit C₁- bis C₆-Alkoholen, wie Dimethylterephthalat, Diethylterephthalat und Di-n-propylterephthalat. Weitere Beispiele für Verbindungen, die als Komponente (a) zur Herstellung der Polyester eingesetzt werden können, sind Oxalsäure, Bernsteinsäure, Glutarsäure, Adipinsäure, Fumarsäure, Maleinsäure, Itakonsäure, sowie die Mono- und Dialkylester der Carbonsäuren mit C₁- bis C₆-Alkoholen, z.B. Oxalsäurediethylester, Bernsteinsäure, Diethylester, Glutarsäurediethylester, Adipinsäuremethylester, Adipinsäurediethylester, Adipinsäure-di-n-butylester, Fumarsäureethylester und Maleinsäuredimethylester. Sofern die in Betracht kommenden Dicarbonsäuren Anhydride bilden können, sind auch die Anhydride der mindestens 2 Carboxylgruppen aufweisenden Carbonsäuren als Verbindung der Komponente (a) zur Herstellung der Polyester geeignet, z.B. Maleinsäureanhydrid, Phthalsäureanhydrid oder Bernsteinsäureanhydrid. Besonders bevorzugt werden als Verbindung der Komponente (a) Terephthalsäure, Phthalsäure sowie die Dimethyl-, Diethyl-, Dipropyl- und Dibutylester von Terephthalsäure und o- bzw. m-Phthalsäure eingesetzt. Es ist selbstverständlich möglich, Mischungen verschiedener Carbonsäuren oder verschiedener Ester einzusetzen. Ebenso kann man auch beispielsweise Mischungen aus Carbonsäuren und Ester oder Mischungen aus Carbonsäuren und Anhydriden bei der Kondensation verwenden.

Als Komponente (b) zur Herstellung der Polyester verwendet man Glycerin, Pentaerythrit, Oligoglycerin bis zu Molekulargewichten von 363 und/oder Additionsprodukte von 1 bis 5 mol mindestens eines Alkylenoxids mit 2 bis 3 C-Atomen an 1 mol der genannten Alkohole z.B. die Additionsprodukte von 1 bis 4 mol Ethylenoxid an Pentaerythrit, Additionsprodukte von 1 bis 3 mol Ethylenoxid an 1 mol Glycerin, Additionsprodukte von 1 bis 3 mol Propylenoxid an 1 mol Glycerin und Additionsprodukte von 1 bis 5 mol Ethylenoxid und/oder Propylenoxid an ein mol Oligoglycerin mit 2 bis 5 einkondensierten Glycerineinheiten.

Bevorzugt verwendet man als Verbindungen der Komponente (b) Glycerin sowie die Anlagerungsprodukte von 1 bis 5 mol Ethylenoxid an ein mol Glycerin.

Als Komponente (c) zur Herstellung der Polyester kommen wasserlösliche Anlagerungsprodukte von 5 bis 80 mol mindestens eines Alkylenoxids an 1 mol C₈- bis C₂₄-Alkohole, C₆- bis C₁₈-Alkylphenole oder C₈- bis C₂₄-Alkylamine in Betracht. Als Alkylenoxide zur Herstellung der Verbindungen der Komponente (c) verwendet man vorzugsweise Ethylenoxid sowie Mischungen aus Ethylenoxid und Propylenoxid. Außerdem eignen sich Mischungen aus Ethylenoxid zusammen mit Propylenoxid und/oder Butylenoxid, Mischungen aus Ethylenoxid, Propylenoxid und Isobutylenoxid oder Mischungen aus Ethylenoxid und mindestens einem Butylenoxid. Diese wasserlöslichen Anlagerungsprodukte der Alkylenoxide sind Tenside. Falls zu ihrer Herstellung Mischungen von Alkylenoxiden verwendet wurden, so können sie die Alkylenoxide in Blöcken oder auch in statistischer Verteilung enthalten.

Geeignete Alkohole, die alkoxyliert werden, sind beispielsweise Octylalkohol, Decylalkohol, Laurylalkohol, Myristylalkohol oder Stearylalkohol sowie die nach dem Ziegler-Verfahren erhältlichen Alkohole mit 8 bis 24 C-Atomen oder die entsprechenden Oxoalkohole. Von den Alkylphenolen haben insbesondere Octylphenol, Nonylphenol und Dodecylphenol zur Herstellung der entsprechenden Tenside Bedeutung. Von den in Betracht kommenden Alkylaminen verwendet man insbesondere die C₁₂- bis C₁₈-Monoalkylamine zur Herstellung der wasserlöslichen Tenside.

Als Komponente (d) eignen sich alkoxylierte mehrwertige Alkohole, die durch Anlagerung von mehr als 5 bis 80 mol Ethylenoxid und/oder Propylenoxid an mehrwertiger Alkohole erhältlich sind. Geeignete mehrwertige Alkohole sind beispielsweise Ethylenglykol, Propylenglykol, Butylenglykole, Pentandiole, Hexandiole, Glycerin, Pentaerythrit, Trimethylolpropan und Oligoglycerine mit 2 bis 5 einkondensierten Glycerineinheiten.

Vorzugsweise lagert man an 1 mol eines mehrwertigen Alkohols 10 bis 40 mol Ethylenoxid oder einer Mischung aus Ethylenoxid und Propylenoxid an. Die Verbindungen der Komponente (d) werden lediglich zur Modifizierung der erfindungsgemäßen Polyester verwendet.

Die erfindungsgemäßen Polyester sind dadurch erhältlich, daß man die Komponenten (a) bis (c) und gegebenenfalls (d) bei Temperaturen von mindestens 120°C kondensiert. Vorzugsweise führt man die Kondensation in dem Temperaturbereich von 150 bis 300°C in Gegenwart der üblichen Polykondensations- und Umesterungskatalysatoren durch. Dabei geht man üblicherweise so vor, daß man die Komponenten (a) bis (d) zusammen mit den Katalysatoren und gegebenenfalls weiteren Zusätzen, wie beispielsweise Antioxydantien, in einem Kessel unter Inertgas aufschmilzt und das sich dabei bildende Wasser bzw. den bei der Umesterung frei werdenden Alkohol abdestilliert. Das Verhältnis der bei der Reaktion eingesetzten Komponenten (a) bis (c) und gegebenenfalls (d) wird dabei vorteilhafterweise so gewählt, daß die Anzahl der OH-Gruppen derjenigen der Carbonsäuregruppen entspricht. Auf diese Weise erhält man Polykondensate mit möglichst hohem Molekulargewicht. Man kann die Kondensation aber auch mit einem Überschuß der Komponente b) beginnen, der im Zuge der Kondensation abdestilliert wird. Weiterhin kann es aber auch von Vorteil sein, eine der Komponente (a) oder (c) sowie gegebenenfalls (d) vollständig oder teilweise zu einem späteren Zeitpunkt der Kondensation dem Reaktionsgemisch zuzugeben. Die Herstellung der erfindungsgemäßen Polyester erfolgt in Analogie zur bekannten Herstellung üblicher Polyester. Solche Verfahren sind bekannt, z.B. aus der eingangs erwähnten US-PS 3 557 039.

Wenn man bei der Herstellung der Polyester als Komponente (a) Dicarbonsäurediester einsetzt, ist es vorteilhaft, bei der Kondensation zunächst die Temperatur langsam von ca. 150 auf 200 bis 220°C zu steigern, um eine Überführung des flüchtigen Dicarbonsäuredialkylesters in nichtflüchtige Vorkondensate zu erreichen. Die weitere Kondensation zu Polyestern mit höheren Molmassen erfolgt dann bevorzugt bei Temperaturen von 200 bis 280°C, wobei die Polykondensation bis zu dem gewünschten Molekulargewicht der Polyester vorangetrieben wird. In dieser Verfahrensstufe destilliert man ebenfalls die entstehenden flüchtigen Bestandteile ab, indem man entweder den Druck erniedrigt oder ein Inertgas, wie Stickstoff, durch die Polyesterschmelze leitet.

Eine besondere Ausführungsform bei der Herstellung der erfindungsgemäßen Polyester besteht darin, daß man die Komponenten (a) und (c) zunächst vorkondensiert und die dabei entstehenden leicht flüchtigen Bestandteile aus dem Reaktionsgemisch entfernt und anschließend die Komponente (b) und gegebenenfalls die Komponente (d) im Zuge der fortschreitenden Reaktion zusetzt. Die so erhältlichen Produkte sind geringer gefärbt als diejenigen, die durch direkte Kondensation der Komponenten (a) bis (d) nach einem Eintopfverfahren erhältlich sind. Ein weiterer Vorteil des Verfahrens der Vorkondensation der Komponenten (a) und (c) zur Herstellung der Polyester liegt darin, daß man gegenüber der gleichzeitigen Kondensation der Komponenten (a) bis (d) kürzere Reaktionszeiten benötigt.

Als Katalysatoren eignen sich sämtliche in der Literatur dafür beschriebenen Verbindungen. Verwendet man als Komponente (a) die freien Polycarbonsäuren oder die Anhydride, so ist p-Toluolsulfonsäure der bevorzugte Katalysator. Setzt man als Komponente (a) Dicarbonsäuredialkylester oder Polycarbonsäureester ein, so verwendet man die üblichen Umesterungskatalysatoren, wie beispielsweise Zinkacetat, Mischungen aus Calciumacetat und Antimonoxid oder Tetraalkoxytitanate, wie Titantetraisobutanolat oder Titantetraisopropanolat. Andere, vorzugsweise eingesetzte Katalysatoren sind beispielsweise Carbonate, Acetate und/oder C₁-C₄-Alkoxylate von Lithium, Natrium, Magnesium, Kobalt, Mangan, Vanadin, Titan und Zinn sowie Zinnoxide. Die Katalysatoren werden im allgemeinen in Mengen von 20 bis 5000, vorzugsweise 50 bis 2000 ppm, bezogen auf die bei der Kondensation eingesetzten Komponenten (a) bis (d), eingesetzt.

Die Kondensation kann in Gegenwart von Antioxidantien durchgeführt werden, z.B. von substituierten Phenolen, wie beispielsweise 2,5-Ditertiärbutylphenol, 2-Methylcyclohexyl-4,6-dimethylphenol, 2,6-Ditertiärbutyl-4-methylphenol, Pyrogallol, phosphoriger Säure oder anderer üblicherweise hierfür verwendeten Antioxidantien. Diese Verbindungen verhindern Verfärbungen der Polyester durch Oxidation während der Kondensation.

Auf 100 Mol-Teile der Verbindungen (a) verwendet man 25 bis 2500, vorzugsweise 35 bis 400 Mol-Teile der Verbindungen der Komponente (b) und 5 bis 110, vorzugsweise 10 bis 100 Mol-Teile der Verbindungen der Komponente (c). Die Verbindungen der Komponente (d) werden lediglich zur Modifizierung der Polyester aus den Komponenten (a) bis (c) eingesetzt. Pro 100 Mol-Teile der Verbindungen der Komponente (a) verwendet man 0 bis 20, vorzugsweise 0 bis 10 Mol-Teile an Verbindungen der Komponente (d).

Vorzugsweise werden Polyester hergestellt durch Kondensation von
(a) Terephthalsäure oder C₁- bis C₆-Dialkylestern der Terephthalsäure,
(b) Glycerin und
(c) wasserlöslichen Anlagerungsprodukten von 5 bis 80 mol mindestens eines Alkylenoxids an 1 mol eines C₈- bis C₂₄-Alkohols. Die Kondensation wird so weit geführt, daß Polyester mit einem Molekulargewicht (Gewichtsmittel) von 3000 bis 35000 entstehen.

Besonders bevorzugt sind Polyester, die
(a) 40 bis 50 mol-% Terephthalsäure,
(b) 17 bis 23 mol-% Glycerin und
(c) 30 bis 35 mol-% eines ethoxylierten linearen C₈- bis C₂₀-Alkohols mit einem Ethoxylierungsgrad von 10 bis 60
einkondensiert enthalten und ein Molekulargewicht (Gewichtsmittel) von 4000 bis 25000 aufweisen. Falls die erfindungsgemäß hergestellten Polyester sich nicht ausreichend in Wasser lösen, kann man zur Unterstützung der Wasserlöslichkeit sogenannte Lösevermittler verwenden. Derartige Verbindungen sind beispielsweise Alkohole, wie Ethanol, Propanol, Isopropanol, Ethylenglykol, Propylenglykol sowie oligomere Ethylenglykole oder oligomere Propylenglykole, die jeweils 2 bis 20 Alkylenglykoleinheiten enthalten. Daneben sind auch anionische Tenside, wie Alkylsulfate, Alkylbenzolsulfonate und Seifen sowie nichtionische Tenside, beispielsweise ethoxylierte Fettalkohole geeignete Lösevermittler. Besonders bevorzugt ist der Einsatz von Laurylsulfat als Lösevermittler. Die Lösevermittler werden in Mengen von 0,05 bis 20 Gew.-%, bezogen auf Polyester, eingesetzt.

Die erfindungsgemäßen Polyester werden als Zusatz zu pulverförmigen oder flüssigen Waschmitteln in Mengen von 0,05 bis 15 Gew.-%, bezogen auf die Waschmittelformulierungen, verwendet. Sie wirken in der Waschmittelflotte als Vergrauungsinhibitoren und als schmutzablösungsfördernder Zusatz (soil release). Von besonderem Interesse sind die erfindungsgemäßen Polyester als Zusatz in phosphatfreien und phosphatreduzierten Pulver-Waschmitteln und in Flüssig-Waschmitteln sowie in Wäschenachbehandlungsmitteln, z.B. Weichspülern. Phosphatreduzierte Waschmittel enthalten weniger als 25 Gew.-% Phosphat.

Die Wasch- und Reinigungsmittelformulierungen weisen die unterschiedlichsten Zusammensetzungen auf. Sie basieren übereinstimmend auf dem Gehalt an Tensiden und gegebenenfalls an Buildern. Für die Waschmittelformulierungen können daher verständlicherweise keine allgemein gültigen detaillierten Zusammensetzungen angegeben werden. Wasch- und Reinigungsmittelformulierungen enthalten als Tenside beispielsweise anionische Tenside, wie C₈- bis C₁₂-Alkylbenzolsulfonate, C₁₂- bis C₁₆-Alkansulfonate, C₁₂- bis C₁₆-Alkylsulfate, C₁₂- bis C₁₆-Alkylsulfosuccinate und sulfatierte ethoxylierte C₁₂- bis C₁₆-Alkanole. Außer anionischen kommen auch nichtionische Tenside in Betracht, beispielsweise C₈- bis C₁₂-Alkylphenolethoxylate, C₁₂- bis C₂₀-Alkanalkoxylate sowie Blockcopolymerisate des Ethylenoxids und Propylenoxids. Die Endgruppen der Polyalkylenoxide können gegebenenfalls verschlossen sein. Hierunter soll verstanden werden, daß die freien OH-Gruppen der Polyalkylenoxide verethert, verestert, acetalisiert und/oder aminiert sein können.

Zu den nichtionischen Tensiden zählen auch C₈- bis C₁₈-Alkylglucoside sowie die daraus durch Alkoxylierung erhältlichen alkoxylierten Produkte, insbesondere diejenigen, die durch Umsetzung von Alkylglucosiden mit Ethylenoxid herstellbar sind sowie Fettsäureester bzw. Fettsäureamide von Hydroxi- oder Aminocarbonsäuren bzw. Sulfonsäuren, wie beispielsweise die Fettsäuresarkoside, -glycolate, -lactate, -tauride oder -isotionate. Die anionischen Tenside können in Form der Natrium-, Kalium- und Ammoniumsalze sowie als lösliche Salze organischer Basen, wie Mono-, Di- oder Triethanolamin oder anderer substituierter Amine vorliegen. Die in Waschmitteln einsetzbaren Tenside können auch zwitterionischen Charakter haben sowie Seifen darstellen. Die Tenside sind im allgemeinen in einer Menge von 2 bis 50, vorzugsweise 5 bis 45 Gew.-% am Aufbau der Wasch- und Reinigungsmittel beteiligt.

Geeignete Builder, die gegebenenfalls in den Wasch- und Reinigungsmitteln vorhanden sind, sind beispielsweise Phosphate (beispielsweise ortho-Phosphat, Pyrophosphat und vor allem Pentanatriumtriphosphat), Zeolithe, Soda, Polycarbonsäuren, Nitrilotriessigsäure, Zitronensäure, Weinsäure, die Salze der genannten Säuren sowie monomere, oligomere oder polymere Phosphonate. Die einzelnen Stoffe werden in unterschiedlichen Mengen zur Herstellung der Waschmittelformulierungen eingesetzt, z.B. Soda in Mengen bis zu 80 Gew.-%, Phosphate in Mengen bis zu 45 Gew.-%, Zeolithe in Mengen bis zu 40 Gew.-%, Nitrilotriessigsäure und Phosphonate in Mengen bis zu 10 Gew.-% und Polycarbonsäuren in Mengen bis zu 20 Gew.-%, jeweils bezogen auf die gesamte Waschmittelformulierung. Wegen der starken Umweltbelastungen, die der Einsatz von Phosphaten mit sich bringt, wurde der Gehalt an Phosphaten in Wasch- und Reinigungsmitteln in zunehmendem Maße erniedrigt, so daß Waschmittel heute bis höchstens 25 % Phosphat enthalten oder vorzugsweise phosphatfrei sind.

Die Waschmittelformulierungen können außerdem als weitere Zusätze Korrosionsinhibitoren, wie Silikate, enthalten. Geeignete Silikate sind beispielsweise Natriumsilikat, Natriumdisilikat und Natriummetasilikat. Die Korrosionsinhibitoren können in Mengen bis zu 25 Gew.-% in der Wasch- und Reinigungsmittelformulierung enthalten sein. Weitere übliche Zusätze zu Wasch- und Reinigungsmitteln sind Bleichmittel, die in einer Menge bis zu 30 Gew.-% darin enthalten sein können. Geeignete Bleichmittel sind beispielsweise Perborate oder chlorabgebende Verbindungen, wie Chlorisocyanurate. Weitere übliche Zusatzstoffe zu Waschmitteln, die gegebenenfalls darin enthalten sein können, sind optische Aufheller, Enzyme und Parfum. Pulverförmige Waschmittel können außerdem noch bis zu 50 Gew.-% eines Stellmittels, wie Natriumsulfat, enthalten. Die Waschmittelformulierungen können wasserfrei sein bzw. nur geringe Mengen, z.B. bis zu 10 Gew.-%, Wasser enthalten. Flüssigwaschmittel können bis zu 80 Gew.-% Wasser enthalten. Übliche Waschmittelformulierungen sind beispielsweise detailliert in der DE-OS 35 14 364 beschrieben, auf die zur näheren Charakterisierung von Waschmittelformulierungen hingewiesen wird.

Die oben beschriebenen Polyester können in sämtlichen flüssigen und pulverförmigen Wasch- und Reinigungsmittelmischungen eingesetzt werden. Sie sind darin vorzugsweise in Mengen von 0,2 bis 10 Gew.-% enthalten. Ein besonderer Vorteil der erfindungsgemäßen Polyester besteht in ihrer guten Verträglichkeit mit den meisten flüssigen Waschmittelformulierungen. In aller Regel sind die erfindungsgemäßen Polyester darin klar löslich. Bei gegebenenfalls dennoch auftretenden Verträglichkeitsproblemen mit der Flüssigwaschmittelformulierungen kann man die oben beschriebenen Lösevermittler, insbesondere Ethylenglykol, Propylenglykol oder jeweils deren Oligomere, Isopropanol oder andere Alkohole in Mengen von 0,1 bis 20 Gew.-%, bezogen auf die Mischung, anwenden. Wie gefunden wurde, führt insbesondere der Zusatz von 1 bis 20 Gew.-%, bezogen auf die Flüssigwaschmittelformulierung, an Laurylsulfat zu einer deutlichen Verbesserung der Verträglichkeit der Polyester im Flüssigwaschmittel. Aufgrund der hohen Verträglichkeit in flüssigen Waschmittelformulierungen können die erfindungsgemäßen Polyester auch in wasserarmen oder gar wasserfreien Flüssigwaschmittelformulierungen zum Einsatz gelangen.

Die erfindungsgemäßen Polyester können auch in Kombinationen mit bekannten Vergrauungsinhibitoren oder schmutzablösungsfördernden Polymeren in ein Waschmittel eingarbeitet werden; z.B. können je nach Waschmittelzusammensetzung Kombinationen mit Pfropfcopolymeren aus Polyalkylenoxiden und Vinylestern oder Acrylestern, mit modifizierten Cellulosederivaten wie Hydroxypropylmethylcellulose, Methylcellulose, Carboxymethylcellulose, mit Polyalkylenoxiden wie z.B. Polyethylenoxid, Polypropylenoxid oder Blockcopolymeren von Ethylenoxid und Propylenoxid und mit Polycarboxylaten wie z.B. Polyacrylsäuren oder Acrylsäure/Maleinsäurecopolymerisaten formuliert werden, wobei durch Synergie der Einsatzstoffe der Effekt größer sein kann, als bei Verwendung der Komponenten allein.

Bei Verwendung der erfindungsgemäßen Polyester in Flüssigwaschmitteln kann es besonders vorteilhaft sein, diese in Kombination mit Polymeren für Flüssigwaschmittel, insbesondere Polycarboxylaten, die durch Einführung von Tensiden in die Polymere modifiziert sind, einzusetzen.

Ein weiterer Vorteil der erfindungsgemäßen Polyester besteht in der guten Wirksamkeit, die über einen großen Molekulargewichtsbereich der Polyester gegeben ist. Beim Einsatz von Polyestern - insbesondere in flüssigen Waschmittelformulierungen - läßt sich ein, wenngleich langsamer, Molekulargewichtsabbau wegen des alkalischen Milieus kaum verhindern. Besonders niedrigmolekulare unverzweigte Polyester des Standes der Technik verlieren schnell ihre Wirksamkeit. Dagegen sind die verzweigten höhermolekularen erfindungsgemäßen Polyester in ihrer Wirksamkeit deutlich verbessert. Zudem werden bei einer gegebenenfalls eintretenden Teilhydrolyse des Polyesters vornehmlich waschaktive, biologisch abbaubare Tenside freigesetzt, die einen zusätzlichen Beitrag zur Waschwirkung erbringen können.

Ein weiterer Vorteil der erfindungsgemäßen Polyester gegenüber den z.B. aus US-PS 3 557 039 bekannten Polyestern besteht in der guten Wirksamkeit gegenüber Mineralöl- und Pigmentanschmutzungen.

Eine bevorzugte Einsatzform der erfindungsgemäßen Polyester besteht in Pulvern oder Granulaten, die durch Sprühtrocknen bzw. Sprühwirbelschichttrocknen der Polyester zusammen mit anderen festen Waschmittelinhaltsstoffen, wie Polycarboxylaten oder Zeolithen, erhältlich sind. Diese Art der Konfektionierung der erfindungsgemäßen Polyester erhöht die Stabilität der Polyester in pulverförmigen Waschmitteln, indem die Polyester vor stärker alkalischen Bestandteilen in der Waschmittelformulierung geschützt werden.

Die angegebenen Molekulargewichte sind Gewichtsmittel der Molmassen. Sie wurden durch Gelpermeationschromatographie bestimmt (Lösemittel war Tetrahydrofuran, als Säulenmaterial wurde PL-Gel (Hersteller: Polymer Laboratories, GB) eingesetzt, die Elutionsgeschwindigkeit betrug 0,8 ml/min bei 35°C. Als Standard wurde engverteiltes Polystyrol verwendet. Detektion erfolgte mit UV-Detektor bei 254 Nm). Die Bestimmung der OH-Zahl und der Säurezahl erfolgte nach Standard-Methoden, z.B. beschrieben bei E. Müller, Houben-Weyl, Methoden der organischen Chemie, Georg Thieme Verlag, Stuttgart 1963, Band 14/2, S. 17/18.

### Beispiele

### A Herstellung der Polyester

### Beispiel 1

In einem 2 l fassenden Dreihalskolben, der mit Rührer, Zulaufgefäß, Destillationsbrücke und Gaseinleitungsvorrichtung versehen ist, wurden 116,3 g Terephthalsäure, 700 g des Anlagerungsprodukts von 25 mol Ethylenoxid an 1 Mol eines Gemisches linearer C₁₆/C₁₈-Fettalkohole, 0,844 g p-Toluolsulfonsäure-Monohydrat und 1,688 g 50 %iger wäßriger phosphoriger Säure vorgelegt und unter Rühren sorgfältig mit Stickstoff gespült. Die Mischung wurde 12 Stunden auf 250°C erhitzt. Nach 3 stündigem Erhitzen beginnt man damit, einen Stickstoffstrom durch die Schmelze zu leiten und fügt nach einer weiteren Stunde 27,3 g Glycerin aus dem Zulaufgefäß zu. Im Verlauf der Kondensation werden 28 g Destillat aufgefangen. Man erhält ein ockerfarbenes wachsartiges Festprodukt mit einem Tropfpunkt von 50°C. Der so hergestellte Polyester hatte ein Molekulargewicht von 16 400, eine Säurezahl von 4,5 und eine OH-Zahl von 4.

### Beispiel 2

Beispiel 1 wird mit den Unterschieden wiederholt, daß man 83,1 g Terephthalsäure, 1040 g eines Additionsproduktes von 50 mol Ethylenoxid an 1 mol eines Gemisches linearer C₁₆/C₁₈-Fettalkohole, 1,142 g p-Toluolsulfonsäure-monohydrat und 2,284 g wäßrige phosphorige Säure vorlegt und nach einer Kondensationsdauer von 4 Stunden bei 250°C 18,4 g Glycerin zusetzt. Man erhielt ein hellbeiges wachsartiges Produkt mit einem Tropfpunkt von 45°C. Der so hergestellte Polyester besaß ein Molekulargewicht von 12250, hatte eine Säurezahl von 5,8 und eine OH-Zahl von 11.

### Beispiel 3

Beispiel 1 wurde mit den Ausnahmen wiederholt, daß man im Kolben 149,5 g Terephthalsäure, 840 g des Additionsprodukts von 25 mol Ethylenoxid an 1 mol einer Mischung aus C₁₆/C₁₈-Fettalkohole, 1,03 g p-Toluolsulfonsäure-monohydrat und 2,06 g 50 %ige wäßrige phosphorige Säure vorlegte und nach einer Kondensationsdauer von 4 Stunden bei 250°C 36,4 g Glycerin zugab. Man erhielt ein hellbeiges wachsartiges Produkt mit einem Tropfpunkt von 50°C. Der so hergestellte Polyester hatte ein Molekulargewicht von 22550, eine Säurezahl von 10,3 und eine OH-Zahl von 2.

### Beispiel 4

Beispiel 1 wird mit den Abweichungen wiederholt, daß man im Kolben 149,5 g Terephthalsäure, 1560 g des Additionsprodukts von 50 mol Ethylenoxid an 1 mol eines C₁₆/C₁₈-Fettalkoholgemisches, 1,74 g p-Toluolsulfonsäure-monohydrat und 3,48 g 50 %iger wäßriger phosphoriger Säure vorlegt und nach einer Kondensationsdauer von 4 Stunden bei 250°C 36,4 g Glycerin zufügt. Man erhielt ein hellbraunes wachsartiges Produkt mit einem Tropfpunkt von 43°C. Der so hergestellte Polyester hatte ein Molekulargewicht von 12250, eine Säurezahl von 5,8 und eine OH-Zahl von 11.

### Beispiel 5

In einem 2 l fassenden Dreihalskolben, der mit Zulaufgefäß, Destillationsbrücke und Gaseinleitungsvorrichtung versehen war, wurden 158,1 g Dimethylterephthalat, 700 g des Additionsprodukts von 25 mol Ethylenoxid an 1 mol eines Gemisches linearer C₁₆/C₁₈-Fettalkohole, 217 g Ethylenglykol, 0,378 g Kalziumacetat, 0,096 g Antimon-III-oxid und 0,18 g Ditertiärbutylmethylphenol vorgelegt und unter Rühren sorgfältig mit Stickstoff gespült. Die Mischung wurde dann auf 160°C erhitzt. Innerhalb von 2,5 Stunden destillierte man bei einer Temperatur in dem Bereich von 160 bis 215°C das gebildete Methanol ab. Innerhalb von 1 Stunde erhöhte man die Temperatur des Reaktionsgemisches auf 235°C und reduzierte den Druck auf 1 mbar. Unter diesem Druck wurde dann innerhalb der folgenden 2,5 Stunden bei Temperaturen von 235 bis 275°C kondensiert. Während der Kondensation destillierten 265,5 g flüchtige Bestandteile aus dem Reaktionsgemisch ab. Man erhielt ein ockerfarbenes wachsartiges Festprodukt mit einem Tropfpunkt von 44 bis 51°C. Der so hergestellte Polyester hatte eine Säurezahl von 0,8 und eine OH-Zahl von 14.

### Beispiel 6

Beispiel 5 wird mit folgenden Abweichungen wiederholt: Man legt im Kolben 126,8 g Dimethylterephthalat, 1040 g des Additionsprodukts von 50 mol Ethylenoxid an 1 mol eines Gemisches linearer C₁₆/C₁₈-Alkohole, 35,0 g Glycerin, 217 g Ethylenglykol, 0,303 g Calciumacetat und 0,077 g Antimon(III)oxid und 0,240 g Ditertiärbutylmethylphenol vor und kondensiert die Mischung innerhalb 7,5 Stunden bei 160 bis 250°C. Hierbei destillierte man 252,7 g flüchtige Bestandteile aus dem Reaktionsgemisch ab. Man erhielt ein ockerfarbenes wachsartiges Festprodukt mit einem Tropfpunkt von 52°C. Der Polyester hatte eine Säurezahl von 0,5 und eine OH-Zahl von 8.

### Vergleichskondensat 1 gemäß Beispiel 11 der US-PS 3 557 039

194 Gewichtsteile Dimethylterephthalat, 155 Gewichtsteile Ethylenglykol und 440 Gewichtsteile Polyethylenglykol einer Molmasse Mₙ = 1540 (Zahlenmittel des Molekulargewichts), 0,44 Gewichtsteile 2,6-Di-tert.-butyl-4-methylphenol, 0,1512 Gewichtsteile Calciumacetat und 0,0388 Gewichtsteile Antimontrioxid werden 4 1/2 Stunden auf 190 bis 240°C erhitzt, wobei das Reaktionsmethanol durch Destillation abgetrennt wurde. 0,140 Gewichtsteile einer 25 % Lösung von Phosphorsäure in Ethylenglykol wurden zugegeben und die Mischung auf 280 bis 285°C erhitzt, wobei ein rascher N₂-Strom durch die Schmelze geleitet wurde, um das Ethylenglykol auszutreiben. Nachdem der Überschuß Ethylenglykol abdestilliert war, wurde für 15 min ein Vakuum von 0,1 Torr angelegt. Das Produkt wurde aufgeschmolzen und durch Einrühren in Wasser eine Dispersion mit 10 % Feststoffgehalt hergestellt.

### B Anwendungstechnische Beispiele

Die vergrauungsinhibierende Wirkung der in den Beispielen 1 bis 4 beschriebenen Polyester wurde folgendermaßen geprüft:
Polyesterprüfgewebe und Polyester/Baumwollmischgewebe wurden zusammen mit einem Standard-Schmutzgewebe einer Reihe von 3 Wäschen unterzogen. Das Schmutzgewebe wurde nach jeder Wäsche erneuert, wobei das Testgewebe nach jeder Wäsche stärker anschmutzte. Der Weißgrad des Testgewebes nach der 3. Wäsche diente zur Beurteilung des Anschmutzungsgrads. Die Werte wurden durch mehrfache Wiederholung und Mittelwertbildung gesichert. Die fotometrische Messung der Remission in Prozent wurde im vorliegenden Fall am Elrepho 2000 (Datacolor) bei der Wellenlänge 460 Nm gemessen (Barium-Primärweißstandard nach DIN 5033). Das bei den Versuchen verwendete Testwaschmittel hatte folgende Zusammensetzung.

| Testwaschmittel I (flüssig) | |
|---|---|
| C₁₂/C₁₄-Alkylbenzolsulfonat | 10 % |
| C₁₃/C₁₅-Talgfettalkohol mit 7 Moläquivalenten Ethylenoxid umgesetzt | 25 % |
| Kokosfettsäure | 10 % |
| Triethanolamin | 5 % |
| Polypropylenoxid der Molmasse Mₙ = 600 g/mol (Zahlenmittel der Molmasse) | 2 % |
| Ethanol | 5 % |
| Isopropanol | 3 % |
| Wasser | 40 % |

| Prüfbedingungen: | |
|---|---|
| Prüfgerät: | Launder-O-meter |
| Wasserhärt: | 3,0 mmol/l (Ca:Mg = 4:1, Molverhältnis) |
| Flottenverhältnis: | 1:12,5 |
| Versuchstemperatur: | 60°C |
| Waschzeit: | 30 min |
| Waschmittelkonzentration: | 8,0 g/l |
| Schmutzgewebe: | WFK10C (Standardschmutzgewebe der Wäschereiforschungsanstalt Krefeld) |

Tabelle 1 zeigt die Erhöhung der Remission von Polyester- und Polyester/Baumwollmischgewebe nach Zusatz von 1 % der erfindungsgemäßen Polykondensate, bezogen auf das Gewicht des eingesetzten Testwaschmittels.

**Tabelle 1**

| Beispiel | Vergleichsbeispiel | Polykondensat | % Remission | |
|---|---|---|---|---|
| | | | PES | PES/BW |
| - | 1 | ohne Zusatz | 52,2 | 61,7 |
| 7 | - | 1 | 66,2 | 72,8 |
| 8 | - | 2 | 65,1 | 72,7 |
| 9 | - | 3 | 60,3 | 71,0 |
| 10 | - | 4 | 60,3 | 70,4 |

| Testwaschmittel II (Pulver) | |
|---|---|
| C₁₂/C₁₄-Alkylbenzolsulfonat | 6,0 % |
| C₁₃/C₁₅-Talgfettalkohol mit 7 Moläquivalenten Ethylenoxid umgesetzt | 5,0 % |
| Seife | 3,0 % |
| Zeolith A | 30,0 % |
| Natriummetasilikat x 5 H₂0 | 5,0 % |
| Natriumcarbonat | 7,5 % |
| Natriumsulfat | 22,4 % |
| Natriumperborat · 4 H₂O | 20,0 % |
| Carboxymethylcellulose-Na-Salz | 0,6 % |
| Testsubstanz | 0,5 % |

| Prüfbedingungen: | |
|---|---|
| Prüfgerät: | Launder-O-meter |
| Wasserhärte: | 3,0 mmol/l (Ca:Mg = 3:1, Molverhältnis) |
| Flottenverhältnis: | 1:12,5 |
| Versuchstemperatur: | 60°C |
| Waschzeit: | 30 min |
| Waschmittelkonzentration: | 8,0 g/l |
| Schmutzgewebe: | WFK10D bzw. EMPA104 (Standardschmutzgewebe der Wäschereiforschungsanstalt Krefeld und der Eidgenössischen Material-Prüfungs-Anstalt, Schweiz) |

Tabelle 2 zeigt die Erhöhung der Remission von Polyestergewebe bei Einsatz von 0,5 % der erfindungsgemäßen Polykondensate im Testwaschmittel. Das Vergleichskondensat 1 gemäß US-PS 3 557 039, das sehr gute vergrauungsinhibierende Eigenschaften besitzt, wurde in die Prüfung mit aufgenommen. Während bei WFK10D-Schmutzgewebe die erfindungsgemäßen Polykondensate etwa dasselbe Niveau erreichen, wie das Vergleichskondensat 1, tritt bei EMPA 104-Schmutzgewebe im Falle des Vergleichsproduktes (Vergleichsbeispiel 3) eine starke Anschmutzung auf. Mit den erfindungsgemäßen Polymeren wird dieser negative Effekt nicht beobachtet.

**Tabelle 2**

| Beispiel | Vergleichsbeispiel | Polykondensat | % Remission | |
|---|---|---|---|---|
| | | | EMPA 104 | WFK10D |
| - | 2 | ohne Zusatz | 73,7 | 70,7 |
| - | 3 | Vergleichsprodukt | 60,2 | 78,5 |
| 11 | - | 5 | 75,2 | 77,2 |
| 12 | - | 6 | 74,0 | 77,1 |

## Patentansprüche

1. Polyester, die erhältlich sind durch Kondensation von
(a) Carbonsäuren mit mindestens 2 Carboxylgruppen, deren Estern, Anhydriden oder Mischungen,
(b) Glycerin Pentaerythrit, Oligoglycerin bis zu Molekulargewichten von 363 und/oder Additionsprodukten von 1 bis 5 mol mindestens eines Alkylenoxids mit 2 bis 3 C-Atomen an 1 mol der genannten Alkohole und
(c) wasserlöslichen Anlagerungsprodukten von 5 bis 80 mol mindestens eines Alkylenoxids an 1 mol C₈- bis C₂₄-Alkohole, C₆₋ bis C₁₈-Alkylphenole oder C₈- bis C₂₄-Alkylamine
im Molverhältnis (a):(b):(c) von 100:(25 bis 2500):(5 bis 110) bei Temperaturen von mindestens 120°C bis zu Molekulargewichten (Gewichtsmittel) von 2000 bis 50000.

2. Polyester nach Anspruch 1, dadurch gekennzeichnet, daß bei der Kondensation von (a) bis (c) zusätzlich pro 100 Mol-Teile (a) 0 bis 20 Mol-Teile
(d) alkoxylierte mehrwertige Alkohole eingesetzt werden, die durch Anlagerungen von > 5 bis 80 mol Ethylenoxid und/oder Propylenoxid an mehrwertige Alkohole erhältlich sind.

3. Polyester nach Anspruch 1 oder 2, dadurch gekennzeichnet, daß als Komponente (b) Glycerin sowie die Anlagerungsprodukte von 1 bis 5 mol Ethylenoxid an ein mol Glycerin eingesetzt werden.

4. Polyester nach einem der Ansprüche 1 bis 3, dadurch gekennzeichnet, daß sie
(a) 40 bis 50 mol-% Terephthalsäure,
(b) 17 bis 23 mol-% Glycerin und
(c) 30 bis 35 mol-% eines ethoxylierten linearen C₈- bis C₂₀-Alkohols mit einem Ethoxylierungsgrad von 10 bis 60
einkondensiert enthalten und ein Molekulargewicht (Gewichtmittel) von 4000 bis 25000 haben.

5. Verfahren zur Herstellung der Polyester nach einem der Ansprüche 1 bis 4, dadurch gekennzeichnet, daß man
(a) Carbonsäuren mit mindestens 2 Carboxylgruppen, deren Ester, Anhydride oder Mischungen,
(b) Glycerin, Pentaerythrit, Oligoglycerin bis zu Molekulargewichten von 363 und/oder Additionsprodukten von 1 bis 5 mol mindestens eines Alkylenoxids mit 2 bis 3 C-Atomen an 1 mol der genannten Alkohole
(c) wasserlöslichen Anlagerungsprodukten von 5 bis 80 mol mindestens eines Alkylenoxids an 1 mol C₈- bis C₂₄-Alkohole, C₆₋ bis C₁₈-Alkylphenole oder C₈- bis C₂₄-Alkylamine und gegebenenfalls
(d) alkoxylierte mehrwertige Alkohole die durch Anlagerungen von > 5 bis 80 mol Ethylenoxid und/oder Propylenoxid an mehrwertige Alkohole erhältlich sind,
im Molverhältnis (a):(b):(c):(d) von 100:25-2500:5-110:0-20 bei Temperaturen von mindestens 120°C kondensiert.

6. Verwendung von Polyestern, die erhältlich sind durch Kondensation von
(a) Carbonsäuren mit mindestens 2 Carboxylgruppen, deren Estern, Anhydriden oder Mischungen,
(b) mindestens zweiwertigen Alkoholen und/oder Additionsprodukten von 1 bis 5 mol mindestens eines Alkylenoxids mit 2 oder 3 C-Atomen an 1 mol eines mindestens zweiwertigen Alkohols oder Mischungen und
(c) wasserlöslichen Anlagerungsprodukten von 5 bis 80 mol mindestens eines Alkylenoxids an 1 mol C₈- bis C₂₄-Alkohole, C₆₋ bis C₁₈-Alkylphenole oder C₈- bis C₂₄-Alkylamine
im Molverhältnis (a) : (b) : (c) von 100:(25 bis 2500) : (5 bis 110) bei Temperaturen von mindestens 120°C bis zu Molekulargewichten (Gewichtsmittel) von 2000 bis 50000 als vergrauungsinhibierender und schmutzablösungsfördernder Zusatz zu pulverförmigen und flüssigen Waschmitteln und Mengen von 0,05 bis 15 Gew.-%, bezogen auf die Waschmittelformulierungen.

## Claims

1. Polyesters obtainable by condensation of
(a) carboxylic acids having at least 2 carboxyl groups, or esters or anhydrides or mixtures thereof,
(b) glycerol, pentaerythritol or oligoglycerol up to molecular weights of 363 and/or addition products of from 1 to 5 mol of at least one alkylene oxide of 2 to 3 carbon atoms with 1 mol of the stated alcohols, and
(c) water-soluble addition products of from 5 to 80 mol of at least one alkylene oxide with 1 mol of C₈-C₂₄-alcohols, C₆-C₁₈-alkylphenols or C₈-C₂₄-alkylamines
in a molar ratio of (a):(b):(c) of 100:(25-2500):(5-110) at not less than 120°C up to weight average molecular weights of from 2000 to 50000.

2. Polyesters as claimed in claim 1, characterized in that the condensation of (a) to (c) is carried out in the additional presence, per 100 mol parts of (a), of from 0 to 20 mol parts of
(d) alkoxylated polyhydric alcohols obtainable by additions of > 5-80 mol of ethylene oxide and/or propylene oxide to polyhydric alcohols.

3. Polyesters as claimed in claim 1 or 2, characterized in that glycerol and the addition products of from 1 to 5 mol of ethylene oxide with one mol of glycerol are used as component (b).

4. Polyesters as claimed in any of claims 1 to 3, characterized in that they contain
(a) 40 - 50 mol % of terephthalic acid,
(b) 17 - 23 mol % of glycerol and
(c) 30 - 35 mol %, of an ethoxylated linear C₈-C₂₀-alcohol with a degree of ethoxylation of 10 to 60 as cocondensed units and have a weight average molecular weight of from 4000 to 25000.

5. A process for preparing the polyesters of any one of claims 1 to 4, which comprises condensing
(a) carboxylic acids having at least 2 carboxylic groups or esters or anhydrides or mixtures thereof,
(b) glycerol, pentaerythritol or oligoglycerol up to molecular weights of 363 and/or addition products of from 1 to 5 mol of at least one alkylene oxide of 2 to 3 carbon atoms with 1 mol of the stated alcohols, and
(c) water-soluble addition products of from 5 to 80 mol of at least one alkylene oxide with 1 mol of C₈-C₂₄-alcohols, C₆-C₁₈-alkylphenols or C₈-C₂₄-alkylamines and optionally
(d) alkoxylated polyhydric alcohols obtainable by additions of > 5-80 mol of ethylene oxide and/or propylene oxide to polyhydric alcohols,
in a molar ratio of (a):(b):(c):(d) of 100:25-2500:5-110:0-20 at not less than 120°C.

6. The use of polyesters obtainable by condensation of
(a) carboxylic acids having at least 2 carboxyl groups, or eaters or anhydrides or mixtures thereof,
(b) at least dihydric alcohols and/or addition products of from 1 to 5 mol of at least one alkylene oxide of 2 or 3 carbon atoms with 1 mol of an at least dihydric alcohol or mixtures and
(c) water-soluble addition products of from 5 to 80 mol of at least one alkylene oxide with 1 mol of C₈-C₂₄-alcohols, C₆-C₁₈-alkylphenols or C₈-C₂₄-alkylamines
in a molar ratio of (a):(b):(c) of 100:(25-2500):(5-110) at not less than 120°C up to weight average molecular weights of from 2000 to 50000, as a grayness-inhibiting and soil release-promoting additive in pulverulent and liquid detergent formulations in amounts of from 0.05 to 15 % by weight, based on the detergent formulations.

## Revendications

1. Polyesters que l'on peut obtenir par la condensation
(a) d'acides carboxyliques comportant au moins deux radicaux carboxyle, de leurs esters, anhydrides ou mélanges,
(b) de glycérine, de pentaérythrite, d'oligoglycérine jusqu'à des poids moléculaires de 363 et/ou de produits d'addition de 1 à 5 moles d'au moins un oxyde d'alkylène comportant au moins 2 ou 3 atomes de carbone sur 1 mole des alcools précités et
(c) des produits d'addition solubles dans l'eau de 5 à 80 moles d'au moins un oxyde d'alkylène sur 1 mole d'alcools en C₈ à C₂₄, d'alkyl(C₆ à C₁₈)phénols ou d'alkylamines en C₈ à C₂₄
dans le rapport molaire (a):(b):(c) de 100:(25 à 2500):5 à 110) à des températures d'au moins 120°C jusqu'à des poids moléculaires (moyenne en poids) de 2000 à 50000.

2. Polyesters suivant la revendication 1, caractérisés en ce que lors de la condensation de (a) à (c), on utilise complémentairement, par 100 parties molaires de (a), 0 à 20 parties molaires
(d) d'alcools polyhydroxylés et alcoxylés, que l'on peut obtenir par des additions de plus de 5 à 80 moles d'oxyde d'éthylène et/ou d'oxyde de propylène sur des alcools polyhydroxylés.

3. Polyesters suivant la revendication 1 ou 2, caractérisés en ce que, à titre de composant (b), on utilise la glycérine ainsi que des produits d'addition de 1 à 5 moles d'oxyde d'éthylène sur 1 mole de glycérine.

4. Polyesters suivant l'une quelconque des revendications 1 à 3, caractérisés en ce qu'ils contiennent, incorporés par condensation,
(a) 40 à 50% molaires d'acide téréphtalique,
(b) 17 à 23% molaires de glycérine et
(c) 30 à 35% molaires d'un alcool en C₈ à C₂₀ linéaire et éthoxylé, avec un degré d'éthoxylation de 10 à 60
et possèdent un poids moléculaire (moyenne en poids) de 4000 à 25000.

5. Procédé de fabrication des polyesters suivant l'une quelconque des revendications 1 à 4, caractérisé en ce que l'on condense
(a) des acides carboxyliques qui comportent au moins deux radicaux carboxyle, leurs esters, anhydrides ou mélanges,
(b) de la glycérine, de la pentaérythrite, de l'oligoglycérine jusqu'à des poids moléculaires de 363 et/ou des produits d'addition de 1 à 5 moles d'au moins un oxyde d'alkylène qui comporte 2 ou 3 atomes de carbone sur 1 mole des alcools précités,
(c) des produits d'addition solubles dans l'eau de 5 à 80 moles d'au moins un oxyde d'alkylène sur 1 mole d'alcools en C₈ à C₂₄, d'alkyl(C₆ à C₁₈)phénols ou d'alkylamines en C₈ à C₂₄ et, éventuellement,
(d) des alcools polyhydroxylés et alcoxylés, que l'on peut obtenir par des additions de plus de 5 à 80 moles d'oxyde d'éthylène et/ou d'oxyde de propylène sur des alcools polyhydroxylés,
dans le rapport molaire (a):(b):(c) de 100:25-2500:5-110:0-20 et à des températures d'au moins 120°C.

6. Utilisation de polyesters que l'on peut obtenir par la condensation
(a) d'acides carboxyliques comportant au moins deux radicaux carboxyle, de leurs esters, anhydrides ou mélanges,
(b) d'alcools au moins dihydroxylés et/ou de produits d'addition de 1 à 5 moles d'au moins un oxyde d'alkylène comportant au moins 2 ou 3 atomes de carbone sur 1 mole des alcools précités et
(c) des produits d'addition solubles dans l'eau de 5 à 80 moles d'au moins un oxyde d'alkylène sur 1 mole d'alcools en C₈ à C₂₄, d'alkyl(C₆ à C₁₈)phénols ou d'alkylamines en C₈ à C₂₄
dans le rapport molaire (a):(b):(c) de 100:(25 à 2500):5 à 110) à des températures d'au moins 120°C jusqu'à des poids moléculaires (moyenne en poids) de 2000 à 50000, à titre d'additif inhibiteur de ternissement et d'adjuvant de décollement de saletés à des produits de nettoyage ou de lessivage pulvérulents et liquides et en proportions de 0,05 à 15% en poids par rapport aux compositions des produits de nettoyage ou de lessivage.
